# EUROPEAN PATENT SPECIFICATION

(11) **EP 1 361 120 B1**
(45) Date of publication and mention of the grant of the patent: **17.05.2006**
(21) Application number: 03008756.3
(22) Date of filing: 17.04.2003
(51) Int. Cl.: B60R 21/16

(54) **Airbag and airbag apparatus**
Gassack und Vorrichtung hierfür
Airbag et son dispositif

(30) Priority: 10.05.2002 JP 2002135613
(43) Date of publication of application: 12.11.2003
(73) Proprietor: TAKATA CORPORATION, Minato-ku, Tokyo 106-8510 (JP)
(72) Inventor: Gu, Weixin, Minato-ku, Tokyo 106-8510 (JP)
(74) Representative: Banzer, Hans-Jörg

(56) References cited:
- US-A- 5 725 244
- US-A- 6 095 557
- PATENT ABSTRACTS OF JAPAN vol. 1995, no. 01, 28 February 1995 (1995-02-28) -& JP 06 286570 A (HINO MOTORS LTD), 11 October 1994 (1994-10-11)
- PATENT ABSTRACTS OF JAPAN vol. 2002, no. 02, 2 April 2002 (2002-04-02) -& JP 2001 277991 A (TAKATA CORP), 10 October 2001 (2001-10-10)
- PATENT ABSTRACTS OF JAPAN vol. 2000, no. 05, 14 September 2000 (2000-09-14) -& JP 2000 052916 A (TAKATA KK), 22 February 2000 (2000-02-22)

## Description

### [Industrial Field of the Invention]

The present invention relates to an airbag of an airbag apparatus installed in a vehicle such as an automobile and, more particularly to an airbag having a vent hole.

### [Related Art]

In an airbag apparatus for an automobile, an inflator is actuated in the event of emergency such as a vehicle collision or rollover so that an airbag is inflated with gas spouted from the inflator, thereby protecting an occupant.

If the airbag is provided with a vent hole(s), gas within the airbag flows out through the vent hole when the occupant plunges into the inflated airbag so as to absorb the impact on the occupant.

Disclosed in Japanese Patent Unexamined Publication No. H08-268213 is an airbag comprising two fabric sheets which are superposed on each other and then sewn together along their peripheries to form the airbag in an envelop shape and having tubular vent holes which are formed by sewing tongue portions of the respective fabric sheets together along their sides. As described in paragraph No. 0010 and paragraph No. 0025 of the publication, the tubular vent holes are pressed against the inner surface of the airbag not to allow the gas flow through the vent holes in an initial stage of the airbag inflation, thereby ensuring the inner pressure of the airbag.

However, the airbag of the aforementioned publication has a problem that gas flowing out through the vent holes is discharged in lateral directions and thus may be sprayed on the occupant directly.

An improved airbag having a vent hole disclosed in Japanese Patent Unexamined Publication No. 2000-52916 is designed to allow gas through the vent hole to flow rearwardly and to disperse over a wide range.

The airbag disclosed in Japanese Patent Unexamined Publication No. 2000-52916 is provided with a nozzle extending outwardly from the periphery of the vent hole for the purpose of preventing the gas flowing out through the vent hole from being intensively sprayed on a certain portion, wherein the ratio between the length L of the nozzle and the diameter D of the vent hole, i.e. L/D, is set in a range form 0.5 to 3. According the airbag, the nozzle wags just like a dog's tail during gas flows out through the vent hole so that the gas flowing out through the nozzle disperses in various directions, thereby preventing the gas from being intensively sprayed on a certain portion.

In US patent no. 5,725,244 an airbag venting mechanism is described which comprises a venting member which is expandable from a first compressed configuration to a second expanded configuration in response to the inflation pressure in the airbag. The venting member has an elongated shape and is formed of a gas-permeable material. In the expanded configuration, the venting member provides a venting surface for releasing gas from the airbag. This structure generally corresponds to the preamble of independent claim 1.

### [Problems to be resolved by the Invention]

According to the airbag of Japanese Patent Unexamined Publication No. 2000-52916, the nozzle becomes cylindrical because of the gas pressure when the inner pressure of the airbag increases, whereby gas can smoothly flow out from the vent hole through the nozzle. Employment of a relatively high-output inflator is required for ensuring the inner pressure of the airbag. This increases the cost.

It is an object of the present invention to provide an airbag in which the initial inner pressure of the airbag can be ensured even with a low-output inflator and gas flowing through a vent hole can be directed to disperse rearwardly, and an airbag apparatus which is provided with the airbag.

### [Means to Solve the Problems]

According to the present invention, this object is achieved by an airbag as defined in claim 1. The dependent claims define preferred and advantageous embodiments of the invention.

The airbag of the present invention is an airbag to be inflated in front of a vehicle occupant, comprising a vent hole which is formed in a rear surface on the opposite side of a surface facing the vehicle occupant and a nozzle of which one end is connected to the peripheral edge of the vent hole, the nozzle being arranged inside the airbag when the airbag is in the folded state and is forced out by gas pressure in the airbag to project outside through the vent hole during the inflation of the airbag. The nozzle blocks the vent hole at an initial stage of inflation.

An airbag apparatus of the present invention comprises the airbag and an inflator for inflating the airbag.

According to the airbag and the airbag apparatus of the present invention, the nozzle is arranged inside the airbag and is thus pressed against the inner surface of the airbag by gas pressure when the airbag is inflated according to the actuation of the inflator so that the vent hole is closed, thereby ensuring the initial inner pressure of the airbag. As the inner pressure of the airbag exceeds a predetermined value, the nozzle is forced out of the airbag through the vent hole and boardens its diameter to open into a cylindrical shape, whereby gas flows out of the airbag through the nozzle from the vent hole. Therefore, the impact on the occupant plunging into the airbag is absorbed.

According to the present invention, the coefficient of friction between the outer surface of the nozzle and the inner surface of the airbag may be larger than the coefficient of friction between inner surfaces of the nozzle. In this case, even when the initial inner pressure is exerted to the nozzle, the movement of the nozzle to be forced out through the vent hole can be slowed down, thereby impeding the open of the nozzle and thus obtaining enough high initial inner pressure.

The present invention can be adopted to various airbags such as a driver airbag, a front passenger airbag, a rear passenger airbag, and a side airbag.

### [Brief Explanation of the drawings]

FIG. 1 is a perspective view of an airbag according to an embodiment in its inflated state.

FIGS. 2(a), 2(b) are sectional views taken along a line II-II of FIG. 1, wherein FIG. 2(a) shows a state before the inflation of the airbag and FIG. 2(b) shows a state after the inflation of the airbag.

### [Embodiments for carrying out the Invention]

Hereinafter, embodiments of the present invention will be described with reference to the attached drawings.

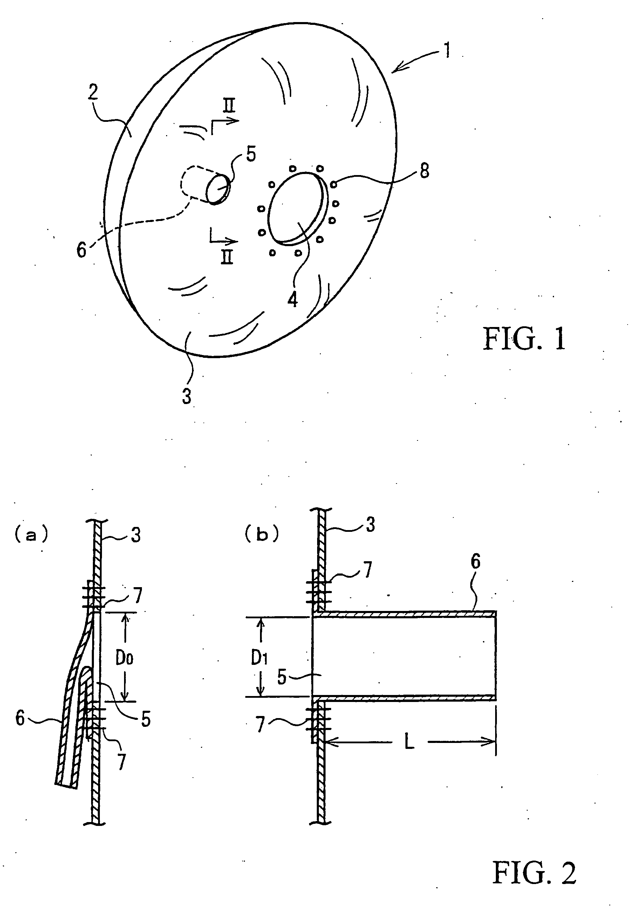

FIG. 1 is a perspective view of an airbag according to an embodiment in its inflated state, FIGS. 2(a), 2(b) are sectional views taken along a line II-II of FIG. 1, wherein FIG. 2(a) shows a state before the inflation of the airbag and FIG. 2(b) shows a state after the inflation of the airbag.

The airbag 1 is an airbag for a driver airbag apparatus comprising a circular front panel 2 and a circular rear panel 3 which are superposed on each other and then sewn together along their peripheries. The rear panel 3 is provided with a central opening 4 through which an inflator is inserted. The rear panel 3 is also provided with a vent hole 5. A nozzle 6 which is fabric and has a cylindrical shape is fixed to the periphery of the vent hole 5 by sewing. Numeral 7 in FIGS. 2(a), 2(b) designates sewing yearns for sewing the nozzle 6 to the rear panel 3.

As for the airbag 1, the periphery of the central opening 4 is attached to a retainer (not shown) of the driver airbag apparatus so that the inflator (not shown) attached to the retainer is inserted through the central opening 4. Numeral 8 designates through holes for bolts or pins for fixing the airbag 1 and the inflator to the retainer. The airbag 1 is folded in a state that the nozzle is arranged inside the airbag 1 and is covered by a module cover, thereby making up an airbag apparatus.

In the event of emergency such as a vehicle collision, the inflator is actuated to inflate the airbag 1. During this, a part of the module cover is torn to open so that the airbag 1 is inflated in the vehicle cabin.

In the initial stage of inflation of the airbag 1, the nozzle 6 blocks off the vent hole 5 and the nozzle 6 is pressed against the inner surface of the airbag 1 because of gas pressure. Therefore, the vent hole 5 is kept closed for a while after the activation of the inflator, thereby rapidly increasing the inner pressure of the airbag 1. As the inner pressure of the airbag 1 exceeds a predetermined value, the nozzle 6 is pressed by the gas pressure and is thus forced out through the vent hole 5 so that the nozzle 6 becomes a cylindrical shape as shown in FIG. 2(b) and the vent hole 5 becomes therefore the open state.

As a vehicle occupant plunges into the inflated airbag 1, gas within the airbag flows out through the vent hole 5 and the nozzle 6, thereby absorbing the impact on the occupant. Since the nozzle 6 wags hard when gas within the airbag 1 flows out through the nozzle 6, the gas disperses to be spread over a wide range, thereby preventing the gas flowing out from the nozzle from being successively sprayed on a certain portion for a long period of time.

It is preferable to satisfy D₁ / D₀ ≥ 1, 1 < L / D₀ ≤ 10 wherein D₀ is the diameter of the vent hole 5, D₁ is the diameter of the nozzle 6, and the L is the length of the nozzle 6. It should be understood that the closing time period of the vent hole 5 in the initial stage depends on the values of D₀, D₁, and L. The closing time period of the vent hole 5 in the initial stage also depends on the coefficient of friction between the outer surface of the nozzle 6 and the inner surface of the airbag 1. The larger the coefficient of friction is, the longer the closing time period is obtained.

It is preferable that the nozzle 6 is made of the same fabric material as or a fabric material similar to the fabric of the front panel 2 and the rear panel 3. However, the nozzle 6 may be made of other fabric material or a synthetic resin sheet.

When the nozzle 6 is made of fabric similar to the fabric of the front panel 2 and the fabric is a woven fabric coated with soft rubber such as silicone rubber or chloroprene rubber, the surface coated with the soft rubber may be the outer surface of the nozzle 6. Accordingly, the outer surface of the nozzle 6 is rubber-coated surface so as to increase the coefficient of friction between the outer surface of the nozzle 6 and the inner surface of the airbag 1, thereby lengthening the closing time period of the airbag 5 in the initial stage without increasing the length of the nozzle 6.

When the nozzle 6 has a relatively short length, the nozzle 6 scarcely disturbs the folding process of the airbag 1, thereby improving the workability of folding process of the airbag 1. In addition, when the nozzle 6 has a relatively short length, the closing time period of the vent hole 5 in the initial stage can be prevented from being varied due to twist of the nozzle 6, thereby securely ensuring the closing time period in the initial stage according to the design.

The aforementioned embodiment is just an example of the present invention and the present invention may take other form than the illustrated example. For example, though the nozzle 6 is superposed on the inner surface of the airbag 1 and sewn together in FIGS. 2(a), 2(b), the nozzle 6 may be superposed on the outer surface of the airbag 1 and sewn together. Besides of sewing, other connecting means such as adhesion may be employed. The number of vent hole may be two or more. When the airbag has two or more vent holes, the lengths of the nozzle for the respective vent holes may be equal to each other or different from each other. By designing the nozzles to have different lengths, the variation with time in the inner pressure of the airbag can be controlled.

When the airbag has two nozzles, the nozzles are arranged inside the airbag such that an end of one of the nozzles is inserted into an end of the other nozzle.

### [Effects of the Invention]

As described above, according to an airbag and an airbag apparatus of the present invention, the inner pressure of the airbag in the initial stage of inflation can be ensured even with a low-output inflator. In addition, gas flowing out from the vent hole can disperse over a wide range, thereby preventing the gas from being successively and intensively sprayed on a certain portion.

## Claims

1. An airbag (1) to be inflated in front of a vehicle occupant, comprising a vent hole (5) which is formed in a rear surface on the opposite side of a surface facing the vehicle occupant and a nozzle (6) of which one end is connected to the peripheral edge of the vent hole (5), wherein
the nozzle (6) is arranged inside the airbag (1) when the airbag (1) is in the folded state and is forced out by gas pressure in the airbag (1) to project outside through the vent hole (5) during the inflation of the airbag (1),
**characterized in that**
the nozzle (6) is configured to block off the vent hole (5) in an initial stage of inflation of the airbag (1).

2. An airbag (1) as claimed in claim 1, wherein the coefficient of friction between the outer surface of the nozzle (6) and the inner surface of the airbag (1) is larger than the coefficient of friction between inner surfaces of the nozzle (6).

3. An airbag apparatus comprising the airbag (1) as claimed in claim 1 or 2, and an inflator for inflating the airbag (1).

## Patentansprüche

1. Airbag (1), welcher vor einem Fahrzeuginsassen aufzublasen ist und ein Lüftungsloch (5), welches in einer rückseitigen Oberfläche auf der gegenüberliegenden Seite einer Oberfläche, welche dem Fahrzeuginsassen gegenüberliegt, ausgebildet ist, und eine Düse (6), deren eines Ende mit der Umfangskante des Lüftungsloches (5) verbunden ist, umfasst, wobei
die Düse (6) innerhalb des Airbags (1) angeordnet ist, wenn sich der Airbag (1) in dem gefalteten Zustand befindet und während des Aufblasens des Airbags (1) durch einen Gasdruck in dem Airbag (1) gezwungen wird, durch das Lüftungsloch (5) nach außen hervorzuragen;
**dadurch gekennzeichnet,**
**dass** die Düse (6) derart ausgestaltet ist, dass sie das Lüftungsloch (5) in einer Anfangsphase des Aufblasens des Airbags (1) blockiert.

2. Airbag (1) nach Anspruch 1, wobei der Reibungskoeffizient zwischen der äußeren Oberfläche der Düse (6) und der inneren Oberfläche des Airbags (1) größer als der Reibungskoeffizient zwischen inneren Oberflächen der Düse (6) ist.

3. Airbagvorrichtung, welche den Airbag (1) nach Anspruch 1 oder 2 und eine Aufblasvorrichtung zum Aufblasen des Airbags (1) umfasst.

## Revendications

1. Sac gonflable de sécurité (1) destiné à être gonflé en face d'un passager de véhicule, comprenant un évent (5) qui est formé dans une surface arrière du côté opposé d'une surface faisant face au passager de véhicule et une buse (6) dont l'extrémité est raccordée au bord périphérique de l'évent (5), dans lequel :
- la buse (6) est agencée à l'intérieur du sac gonflable de sécurité (1) lorsque le sac gonflable de sécurité (1) est dans l'état plié et est forcé à l'extérieur par la pression de gaz dans le sac gonflable de sécurité (1) pour faire saillie à l'extérieur par l'évent (5) pendant le gonflage du sac gonflable de sécurité (1),
**caractérisé en ce que** :
- la buse (6) est configurée pour bloquer l'évent (5) dans son étape initiale de gonflage du sac gonflable de sécurité (1).

2. Sac gonflable de sécurité (1) selon la revendication 1, dans lequel le coefficient de frottement entre la surface externe de la buse (6) et la surface interne du sac gonflable de sécurité (1) est supérieur au coefficient de frottement entre les surfaces internes de la buse (6).

3. Dispositif de sac gonflable de sécurité comprenant le sac gonflable de sécurité (1) selon la revendication 1 ou 2, et un gonfleur pour gonfler le sac gonflable de sécurité (1).
